# EUROPEAN PATENT SPECIFICATION

(11) **EP 1 228 482 B1**
(45) Date of publication and mention of the grant of the patent: **09.04.2003**
(21) Application number: 00972838.7
(22) Date of filing: 20.10.2000
(51) Int. Cl.: G06K 17/00

(54) **CONTAINER TRACKING SYSTEM AND REUSABLE CONTAINER INCLUDING A TRANSPONDER**
BEHÄLTERFOLGESYSTEM UND WIEDERVERWENDBARER BEHÄLTER MIT EINEM TRANSPONDER
SYSTEME DE REPERAGE DE CONTENEURS ET CONTENEUR REUTILISABLE COMPRENANT UN TRANSPONDEUR

(30) Priority: 20.10.1999 DE 19950532; 28.09.2000 US 670815
(43) Date of publication of application: 07.08.2002
(73) Proprietor: IFCO Systems GmbH, 82049 Pullach (DE)
(72) Inventor: HANS, Umiker, CH-8132 Egg (CH)
(74) Representative: Leske, Thomas, Dr.
(86) International application number: EP0010390
(87) International publication number: WO01029761

(56) References cited:
- WO-A-94/27117
- WO-A-99/23623
- DE-A- 4 313 049
- GB-A- 2 308 947
- US-A- 5 969 606

## Description

The invention relates to an information system comprising a plurality of reusable devices for carrying items during transportation and an information center.

The reusable devices, or transportation means, could be, for instance, a receptacle or a container or a packing or a pallet or a trolley car. Such a kind of transportation means comprises a transponder (also called: electronic tag), which can receive, store and deliver information about the location of said transportation means.

The invention is thus directed to an information system comprising at least one information center and a plurality of reusable transportation means (reusable devices), wherein a computer is included in said information center which interrogates the transponders to obtain at least the locations and which stores that information together with some further information.

Tracking systems of different kinds based on transponders or electronic tags or radio tags or RFID (radio frequency identification) mounted on containers or carriers of some kind are known, e.g. from the documents DE 43 13 049, WO 94/27117, EP 412 020, WO96/13015, EP 905 057, EP 507 773, EP 292 236, DE-GM 92 12 243, EP 025 510, WO97/38661, EP 458 722, EP 443 897, EP 411 012, DE 43 34 668 and DE 196 19 851.

A method and a device for commissioning semi-automatically different commodities is known from the German patent specification DE 19526131; it is this kind of a device from which the invention starts. According to DE 19526131, commodities provided for in shelves, are transported by a cargo carrier on a conveyer belt. In the beginning, a commissioning order is edited by the customer computer; this order is transmitted via a transponder teletype writer onto an encodable transponder which is provided on the cargo carrier; thereby, control operations acting upon the conveyer belt are triggered. At a given control station, a movable computer for handling commissions and run by staff members exchanges information with said transponder.

The German patent DE 4313049 discloses a transport container having a freely programmable transponder. The transponder is arranged in an edge strip along one longitudinal side of the transport container. Even when several transport containers are stacked or arranged immediately next to each other, sufficient safety or separation gap subsists between the transponders. In order to avoid interferences when reading from the transponder or writing onto the transponder, the document DE 4313049 discloses to arrange the transponder at a certain location within the edge strip, namely some millimetres apart from the corner and some millimetres apart from the interior filling space and some millimetres apart from the edge of the container. The freely programmable transponder allows container- and load-specific data to be stored, requested, partially or completely erased or renewed. A central computer has access to the transponders by means of antennas or by means of portable read/write devices having replaceable IC-cards. The computer of the document DE 431049 is not designed to interrogate and to trace the actual physical locations of a plurality of containers in a wide-spread information system. Thus, the known transponder does not receive information about a location of the container, because the actual physical location of the antenna or of the portable read/write device is not recorded. In addition, the prior art according to DE 431049 does not disclose data for yielding a use profile of the container, because valuable conclusions about the condition of a container can only be drawn when several data are combined to yield a use profile which provides information about the use of the container in the interval between the date of its manufacture and the acute date.

The document WO 49/27117 discloses a security system for testing whether or not the contents of a container has been exposed to a predetermined physical stimulus. The system has a sensor, for example a pressure sensor, and a tag in the form of a radio frequency transponder which are both placed in the container. The transponder transmits data representative of the output state of the sensor in response to an interrogation signal. The interrogation signal is sent from a transmitter/receiver outside the container, without the container having to be opened. There is no mentioning of a network of transmitters/receivers being connected to a computer of an information system.

The invention is confronted with the problem of designing the known, reusable transportation means including the transponder in such a manner that it becomes fit for considerably longer routes of transportation and for considerably varying profiles of exploitation. Another object of the instant invention is to further extend the trackability of such reusable containers having transponders.

The problem is solved by an information system in accordance with claim 1. In a further aspect of the invention, there is provided the application of the reusable devices according to claim 2. In a still further aspect, there is provided the application of the transponders of the reusable devices according to claim 3.

The reusable transportation means is e.g. a container or a palette. The container or palette comprises a transponder which receives and stores information on the actual location of said transportation means and, in addition, information on the condition of a transported merchandise and on a profile of use of the transportation means. In a preferred embodiment, information on a mechanical state of readiness of the transportation means is received and stored.
Expedient developments of the invention are presented in the dependent claims 4 - 18. In particular, the reusable transportation means may be configured in the form of a folding chest, in which the transponder can be installed in an invisible and hidden manner.

In a particular embodiment, there is provided a container tracking system comprising a plurality of trackable containers or carriers and a computer tracking system. Each trackable container or carrier includes a housing body and a transponder disposed in the housing body, the transponder having a memory and being configured for transmitting and receiving data to and from the memory. The computer system which supplements the container tracking system comprises a plurality of read write units, each unit being configured for transmitting and receiving data to and from the memory of the transponder. The data which are exchanged between the computer system and the memory of the transponder concern at least a location of the container corresponding to a location of each read write unit, and a processing unit or computer disposed at a distance remote from the container and being configured for receiving the data from at least one of said read write units and the respective transponder, the processing unit thereby permitting a monitoring of the data.

The container tracking system comprises three electronic levels:
- a transponder having a memory disposed in the housing body of the trackable container,
- a plurality of read/write units disposed relatively close to the track of the container transponder, and
- a central processing unit disposed remote from the track of the container transponder.

The central processing unit may be configured for interrogating the container transponders, when they are located in the trajectory between two read/write units.
This remote processing unit may be coupled to the Internet and/or to a GPS link so that the data of the container transponder may be online accessible.
The transponder may include a sensor, that is coupled to the memory therein. Thus, the container tracking system is apted for sensing a variable which is pertinent to a container and/or a contents of the container. The sensor is adapted to generate a sensed value for the variable and to transmit the sensed value to the memory of the transponder, the memorized data thereby including the sensed value. The container tracking system is thereby permitted to monitor the data of the sensed variable, for instance a temperature, a humidity level, a luminosity or a radiation variable within the container.

The transponder on the lowest level of the container tracking system may further include a timer coupled to the memory. The timer may record the time between two events to generate a value corresponding to the time elapsed and to transmit the sensed value to the memory. The data may thereby include a time value corresponding to the time elapsed between two events. The start time may be induced by the passing a read write unit and the stop time may be induced by the passing of another read write unit. The two events may also correspond to an indirect starting and/or stopping of the timer when a respective read write unit obtains a command from the central processing unit.

Tracking data like origin, destination, departure from the origin and arrival time at the destination may be memorized in the transponder. It is possible to store a use profile over the life time of a container within the memory of the respective built-in transponder.

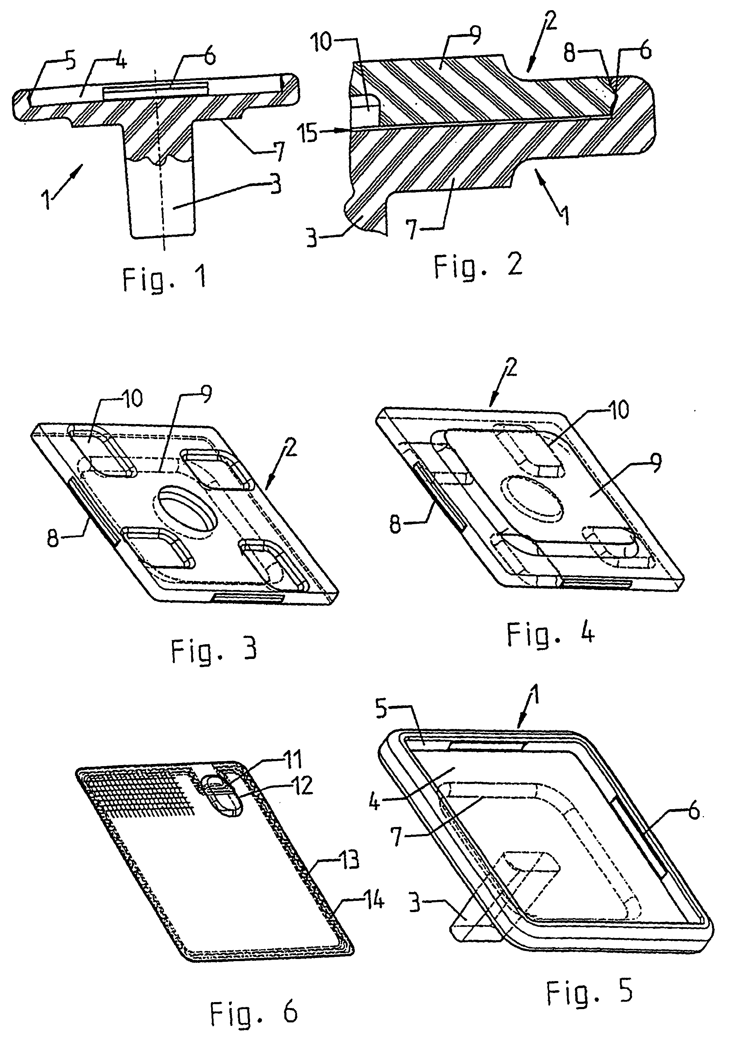

The invention is now explained in more detail on the basis of an embodiment of a folding chest fitted with a transponder. The container and transponder will be explained by referring to Fig. 1 to 10.

Fresh products play an outstanding role in the commerce of foodstuffs. Freshness and quality are the most important shopping criteria for the consumer.

An altered environmental consciousness, which finds expression not only in the products themselves but also in the packaging systems, adds to this criterion. Official regulations regarding the disposal of packaging materials have to be respected, too.

The totality of these requirements is turned into a multiway-packing system which is eco-friendly and economical. The quality of merchandise is ensured during transport, for example in the case of fruit, vegetables, eggs, meat products, sausages, poultry, cheese or fish. Damage in transit is minimized; the cost in logistics is decreased; one-way packages involving respective cost and risks in terms of disposal are avoided.

A "green" chest for fruit and vegetables has, for instance, the basic dimensions of 60 cm x 40 cm. Yet, the basic format may also have 40 cm x 30 cm. In using a crate unfolder, 850 folding chests can be put open per hour, so that they can accommodate fruit, vegetables, etc. At the end of the transport route and after emptying, the folding chests can be fold up again by means of a collapsing machine.

The cycle of the multiway-transportation packings operates as follows:

An manager of the reusable transportation means including a transponder delivers the chests, containers and boxes, transformed into a volume-saving configuration to producers, wrappers and industries. There, the receptacles are unfolded and pass, when being filled, to the traders respectively the distributors. Thereafter, the empty folding chests return to the store houses and are fetched by the manager of the traders. Finally, they are cleaned, inspected and sorted by types. Thereafter they are ready for re-entering the cycle.

The information system in accordance with the invention can be used in passing beyond borders and countries. For example, a folding chest designed specifically for the distribution of bananas has exploitable inside dimensions of 570 mm in length, 370 mm in width and 199 mm in height; the outside dimensions, when stacked, are respectively 600 mm in length, 400 mm in width and 211 mm in height; the outside dimensions, when folded, are respectively 600 mm in length, 400 mm in width and only 45 mm in height.

Another example of embodiment is given by folding chests for heavy charges. The chests having 301 mm or 352 mm of height are suited for receiving a charge of up to 25 kg of fruit. In the empty state the reduction in volume amounts to about 80%. The closure mechanism of the folding chests is easy to be handled.

Arranged on the chests, or also pallets, in accordance with the invention there are transponders which communicate, for example, with portable data terminals. By the intermediary of such portable data terminals, each and every moving of the chests and/or pallets can be tracked and, for instance, input into the Internet system, wherefrom the information can be fetched.

The transponders are installed in the chest or pallet in such a manner that they are not visible from the outside. In this way the danger of fraudulent data manipulation is reduced. The transponders may be incorporated by moulding or fitting. They are insensible to environmental atmospherical influences as for instance air moisture or temperature.

When a packing operation has come to an end, the mobile data terminal inputs the data, arriving from a packing hall of a producer, either into the Internet, or it transmits them to the computer of an information center or directly to the customer.

The transponder is connected to a sensor which determines by means of optical, electrical or magnetic scanning whether or not the folding chest is locked in the transport state or is folded into the return transport state. This information about the mechanical state of readiness of the folding chest is stored in the transponder and is available for being fetched. The folding chest or, more generally speaking, the transporting means may also allow for being mechanically locked into more than two of such states.

In order to monitor the quality of the transported merchandise, a temperature profile or a temperature limit may be stored in the transponder. A temperature sensor, which is also installed in the folding chest and connected to the temperature sensor, measures the march of temperature to which a piece of perishable food is subjected. The time of filling or the expiry date of the merchandise is information which is stored in the folding chest without using a special sensor. Said information can be retrieved centrally in order to update the logistical requirements, for example in order to accelerate transportation. It is, however, likewise possible that the transponder transmits by itself an alarm signal on the basis of the stored data and criteria, if the merchandise risks perishing.

In terms of additional information about the folding chest itself, the memory of the transponder may contain: the state of load or filling if the folding chest is open; net weight, tara, life time or age of date of manufacture of the folding chest; data about the state of cleanliness, humidity or maintenance of the folding chest; conductivity of the plastic material; color or fluorescent color, state of magnetisation. Valuable conclusions about the condition of the folding chest can be drawn when several data of this kind can be combined to yield a usability profile which provides information about the use of the chest in the interval between the date of its manufacture and the acute date.

Depending upon the individuality- of the merchandise, the following data of information are additionally contained in the memory of the transponder: nature of freight, type of the charge, length or weight charge, of the charge, owner of the charges, place of origin and/or place of destination of the merchandise, type of packaging, delivery period or time of delivery, receiver of the merchandise, price of the merchandise, color of the merchandise, consistency of the merchandise, number of items or of bunches, commission number of the merchandise, acoustic emissions or noises of the merchandise.

Apart from the temperature sensor already mentioned, the transponder may be connected also to other sensors that measure for instance the humidity of air, the air pressure respectively the altitude, the exposition to radiation, the dust, the noise, the luminosity or the vibration (concussion) of the surroundings.
The preferred transponder is insensitive to atmospherical or environmental conditions like humidity and temperature.
It has been explained that the invention applies to a reusable transportation means, as for instance a receptacle or a container or a packing or a pallet or a trolley car. Such a kind of transportation means comprises a transponder (also called: electronic tag), which can receive, store and deliver information about the location of the transportation means.

The invention is confronted with the further problem of designing such a reusable transportation means including the transponder in a manner that it becomes fit for considerably longer routes of transportation and for considerably varying profiles of exploitation. In this context, the trackability must be extended.

The problem is solved by a reusable transportation means in which the transponder is arranged in accordance with an information system, wherein a plurality of such transponders installed in transportation means are inquired by a computer located in an information center.

When a packing operation has come to an end, the mobile data terminal inputs the data arriving from a packing hall of a producer, either into the Internet, or it transmits them to the computer of an information center or directly to the customer by GPS.

The transponder is connected to a sensor which may determine by means of optical, electrical or magnetic scanning whether or not the folding chest is locked in the transport state or is folded into the return transport state. This information about the mechanical state of readiness of the folding chest may be stored in the transponder and is available for being fetched. The folding chest or, more generally speaking, the transporting means may also allow for being mechanically locked into more than two of such states.

The container casing of the instant invention is preferably made of plastic material and capable of being processed by molding, and used for protectively housing a transponder, which comprises a plane carrier fitted with an enclosed chip and a frame antenna extending along said carrier.

A transponder in this sense is a transmission- reception device operating in accordance with a request-and-answer system. A coded request signal received by the transponder is decoded and evaluated according to the identification and other information of the enquirer. Thereafter, a coded response signal, selectively destined to the enquirer, is transmitted, which contains the desired information, which signal is decoded automatically and evaluated by the enquirer likewise.
Thus, these transponders consist of a chip, which is disposed on a plane carrier, having the shape of a fine-meshed sieve, which carrier supports also the transmit-and-receive antenna. A transponder of this kind is also referred to as "tag" by experts in the field. Conventionally, the tag is stuck on the object to be equipped with it, or else, if the object is made of plastic material, the tag is laid, for example, in an injection mold and then embedded by injection molding. Examples of said objects are, e.g. containers or baskets wherein products, for example, provisions, are transported from a whole sale distributor to a chain sales store.

Stuck transponders manufactured in the form of tags may incur damage. In the case of plastic containers which are manufactured in a mold by injection, the transponders may be damaged by the injection itself, and they can also be shifted, so that they are ineffective in use.

The advantages obtained consist essentially in the fact that the transponder is entirely enclosed and protected right on from the beginning and that it cannot be displaced during the injection molding procedure.

The transponder is incorporated safely in the container by way of molding.

The container is explained hereafter in more detail on the basis of drawings which illustrate only one way of implementation.
Fig. 1 shows a vertical cross-section of a first casing part and of a second casing part, with the first part having a protruding nose for positioning the part and being adapted to receive a transponder;
Fig. 2 shows a cross-section of an edge portion of a casing consisting of two casing parts which are connected to one another by means of a snap-lock;
Fig. 3 shows a view of the interior;
Fig. 4 is an illustrative representation of a second casing part;
Fig. 5 is an illustrative representation of a first casing part, which is shown as being disposed in alignment with the second casing part;
Fig. 6 shows a top view of a transponder;
Fig. 7 is an illustrative representation of the casing formed in accordance with the invention and viewed from the side, with the positioning projection thereon;
Fig. 8 is an illustrative representation corresponding to the one shown in Fig. 7 but exposing the opposite side of the casing;
Fig. 9 shows schematically the mode of insertion of the casing into an injection mold; and
Fig. 10 is an illustrative representation of an edge portion of a container, with a casing being inserted therein.

The casing consists of a first casing part 1 made of plastic material and of a second casing part 2 made of plastic material.

The first casing part 1 shown in vertical section in Fig. 1 comprises a protruding nose for positioning the nose. This first casing part is formed with a deepening 4, surrounded by side walls 5. The body of the first casing part 1 has a square ground plot so that the side walls run in a straight line.

In each of the side walls 5 of the first casing part 1, there is formed a snap lock portion with the side wall 5 having the shape of an inner groove 6. Moreover, the first casing part 1 is stepped up by an elevation 7 on the side which comprises the protruding nose 3.

The second platelike casing part 2 is provided along its four edges with snap lock sections having the shape of beads 8. Moreover, the second casing portion 2 is provided with a bead 9 too.

In the second casing portion 2 having the shape of a square ground plate, four longitudinally extended guiding indentation 10 are formed, which are angularly spaced apart from one another by 90°.

Fig. 6 shows a top view of a transponder to be laid into the casing consisting of the parts 1 and 2. The transponder comprises a carrier 13 which has the form of a fine-meshed sieve. The chip 11 of the transponder is arranged on the carrier 13, which chip 11 is completely enclosed by a sheathing 12 made of plastic material. The chip 11 is connected to the frame antenna 14 of the transponder.

It is clear that, when the transponder is going to be deposited on the second part 2 shown in Fig. 3 to which purpose its position shown in Fig. 6, has been inverted spatially by 180°, the bead-shaped sheath 12 ends up in lying in one of the guiding indentations 10. As can be seen in Fig. 3, there are four possible positions prepared for the transponder on the second casing part 2. In each one of these positions the transponder is guided by the enclosure projecting into a respective guiding indentation 10, i.e., the transponder is unable "either to shift" or to rotate (because of the elongated shape of the enclosure 12 and the respective guiding indentation).

For the purpose of mounting, the transponder is laid in the position taken in Fig. 6 for example, into the deepening 4 provided in the first casing part 1, viz. in particular Fig. 5. Thereafter, the second casing portion 2 is inserted with keeping the position taken in Fig. 4, with the external beads 8 of the second casing portion 2 snapping into the inner grooves 6 of the casing part 1, so that these two parts are held to oneanother by a snap connection.

In this position, the external beads 8 and the inner grooves 6 are disposed such - viz. Fig. 2 - that in between the main surfaces opposing one another of the two casing parts 1, 2 there exists a space for housing the transponder, which space is indicated in Fig. 2 by the arrow 15.

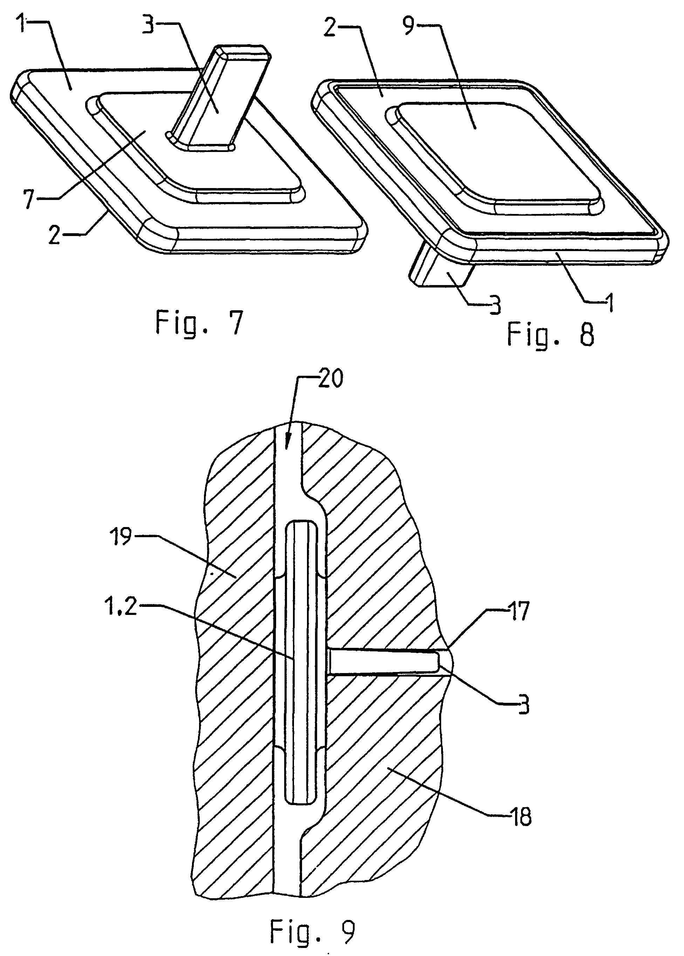

As a result, a casing is obtained with a transponder being enclosed, as shown in the Figures 7 and 8.

In order to manufacture a container by way of injection molding, which comprises the casing 16 used for storing any kind of merchandize, the positioning nose 3 of the casing- viz. Fig. 9 - is passed through a window 17 in a wall 18 of an injection mold element. Thereafter, a further injection mold element 19 is disposed in a known manner at a certain distance from the wall 18, i.e. of the entire part to be obtained by injection molding, so that the container 16 can be formed by injection molding. By virtue of the positioning nose 3, the casing 1, 2 installed in the injection molding tool (1, 23) is not only positioned exactly, but also, it cannot be shifted or twisted by the entering fused plastic material. The fused plastic material, which is introduced into the injection mold for the manufacture of a whole casing 1, 2, flows also into the gap 20, where it merges with the casing 1, 2 placed therein, in order to produce an materially intimate connection between the container 16, e.g. a wall portion of it, and the casing 1, 2 which includes the transponder safely disposed therein.

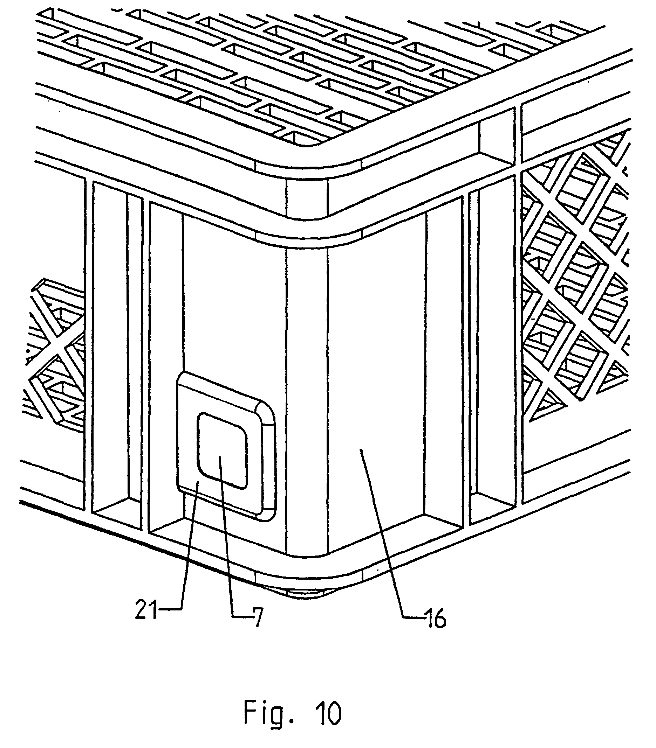

In the course of removing the container 16 obtained by injection molding from the mould, the positioning nose 3 is detached therefrom. Since the overall thickness of the casing 1, 2 is equal to the thickness of the wall of the container in the respective region concerned, to which said region is in alignment with the elevations 7, 9. For the reason of strength, the wall of the container 16 comprises a thickening 21 as shown in Fig. 10, in the area where the casing 1, 2 is integrated by way of casting, with Fig. 10 showing a comer region of the container 16 where the transponder is embedded. It should be noted that for the sake of improving the detection of the locus of the transponder in the container 16, the casing parts 1, 2 may be tinted with different colors. As an example of a container tracking system based on container-mounted electronic components or carrier transponders, respectively, the container tracking system of the applicant covers 23 countries and has 6.000.000 on cycle. 11 different kinds of containers are handled by this container tracking system. The receiving and emitting means of the transponder do not need a battery, as is known in the art.

## Claims

1. An information system comprising at least one information center and a plurality of reusable devices for carrying items during transportation,
- each reusable device comprising a transponder that receives information about a location of the device and that can be interrogated,
- the information center having a computer that interrogates the transponders of the plurality of reusable devices to obtain at least information about the locations of said devices and that stores said information; and
wherein each transponder is adapted to store further information therein, said information comprising
- conditions or other data of the items being transported, and
- data for yielding a use profile of the device for carrying items during transportation.

2. Application of said reusable devices for carrying items during transportation in an information system according to claim 1,
**characterized in that** the transponder of each said reusable device is adapted to store further information, said further information comprising at least a mechanical state of readiness of said reusable device.

3. Application of said transponder in an information system according to claim 1 having reusable devices for carrying items during transportation,
which transponder is adapted for storing and outputting information comprising
a location and a mechanical state of readiness and a use profile of the respective device for carrying items during transportation, and
further data concerning conditions of said transported items.

4. An information system according to claim 1, or an application of the reusable devices according to claim 2, or an application of a transponder according to claim 3, **characterized in that** a temperature profile or a temperature limit can be additionally stored in said transponder.

5. An information system according to claim 1, or an application of the reusable devices according to claim 2, or an application of a transponder according to claim 3, **characterized in that** the transponder is installed in the reusable device such that it is invisible or hidden.

6. An information system according to claim 1, or an application of the reusable devices according to claim 2, or an application of a transponder according to claim 3, **characterized in that** the transponder is molded or inserted into the device for carrying items during transportation.

7. An information system according to claim 1, or an application of the reusable devices according to claim 2, or an application of a transponder according to claim 3, **characterized in that** the device for carrying items during transportation can be locked in at least two positions.

8. An information system according to claim 1, or an application of the reusable devices according to claim 2, or an application of a transponder according to claim 3, **characterized in that** the device for carrying items during transportation is a folding chest and that one or more of the following information data can be stored in the transponder of said folding chest:
"locked/folded" in terms of the state of readiness, the state of filling "filled/empty", net weight, condition "clean/dirty", life time or date of manufacture, profile of use including maintenance and cleansing dates, state "humid/dry", conductivity of the plastic material, color or fluorescent color, state of magnetization.

9. An information system according to claim 1, or an application of the reusable devices according to claim 2, or an application of a transponder according to claim 3, **characterized in that** at least one of the following information data regarding the transported items can be stored additionally:
nature of the freight, amount and weight of the freight, type of packaging, time of delivery, receiver of the items, price of the items, color of the items, consistency of the items, number of items or number of bunches, commission number of the items, acoustic emissions or noise of the items.

10. An information system according to claim 1, or an application of the reusable devices according to claim 2, or an application of a transponder according to claim 3, **characterized in that** at least one information of the following ones regarding the environment can be stored additionally:
temperature, air humidity, air pressure respectively altitude, radiation, dust, noise, light intensity, concussion.

11. An information system according to claim 1, or an application of the reusable devices according to claim 2, or an application of a transponder according to claim 3, **characterized in that** the information contained in the transponder can be read out by an electronic reader device and supplied to a central storage, and
**characterized in that** this information is online accessible for the purpose of management and identification of transport routes.

12. An information system according to claim 1, or an application of the reusable devices according to claim 2, or an application of a transponder according to claim 3, **characterized in that** the reusable devices for carrying items during transportation are managed in respect of transports, routine inspections, cleansing and/or maintenance.

13. An information system according to claim 1, or an application of the reusable devices according to claim 2, or an application of a transponder according to claim 3, **characterized in that** the transponder is insensitive to atmospherical and environmental conditions, for instance humidity and temperature.

14. An information system according to claim 1, or an application of the reusable devices according to claim 2, or an application of a transponder according to claim 3, **characterized in that** the transponder is connected to one or more sensors.

15. An information system according to claim 1, or an application of the reusable devices according to claim 2, or an application of a transponder according to claim 3, **characterized in that** the transponder comprises a timer, which is coupled to the transponder for registering a time delay occuring between two events, wherein the timer generates a signal in correspondence with the expired time and transmits said signal to the transponder memory.

16. An information system according to claim 1, or an application of the reusable devices according to claim 2, or an application of a transponder according to claim 3, **characterized in that** the reusable device for carrying items during transportation can be stacked in the empty condition in a first state of readiness in which the stacking volume is reduced in comparison to the stacking volume that is taken in a second mechanical state of readiness.

17. An information system according to claim 1, or an application of the reusable devices according to claim 2, or an application of a transponder according to claim 3, wherein the information center is coupled to the internet for transmitting data thereto, the data thereby being available online.

18. An information system according to claim 1, or an application of the reusable devices according to claim 2, or an application of a transponder according to claim 3, wherein the information center is coupled to a global position system (GPS) link.

## Patentansprüche

1. Informationssystem mit mindestens einer Informationszentrale und mehreren wiederverwendbaren Einrichtungen zum Tragen von Artikeln während des Transports, wobei
jede wiederverwendbare Einrichtung einen Transponder umfaßt, der Informationen über einen Aufenthaltsort der Einrichtung empfängt und abgefragt werden kann,
die Informationszentrale einen Computer aufweist, der die Transponder der mehreren wiederverwendbaren Einrichtungen abfragt, um mindestens Informationen über die Aufenthaltsorte der Einrichtungen zu erhalten, und der diese Informationen speichert; und
wobei jeder Transponder so ausgelegt ist, daß in ihm weitere Informationen gespeichert werden, darunter
- Zustände oder andere Daten der transportierten Artikel und
- Daten zur Gewinnung eines Benutzungsprofils der Einrichtung zum Tragen von Artikeln während des Transports.

2. Anwendung der wiederverwendbaren Einrichtungen zum Tragen von Artikeln während des Transports in einem Informationssystem nach Anspruch 1,
**dadurch gekennzeichnet, daß** der Transponder jeder wiederverwendbaren Einrichtung so ausgelegt ist, daß er weitere Informationen speichert, darunter mindestens einen mechanischen Status der Bereitschaft der wiederverwendbaren Einrichtung.

3. Anwendung des Transponders in einem Informationssystem nach Anspruch 1 mit wiederverwendbaren Einrichtungen zum Tragen von Artikeln während des Transports,
wobei der Transponder so ausgelegt ist, daß er Informationen speichert und ausgibt, darunter
einen Aufenthaltsort und einen mechanischen Status der Bereitschaft und ein Benutzungsprofil der jeweiligen Einrichtung zum Tragen von Artikeln während des Transports und
weitere Daten, die Zustände der transportierten Artikel betreffen.

4. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** zusätzlich ein Temperaturprofil oder eine Temperaturgrenze in dem Transponder gespeichert werden kann.

5. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** der Transponder unsichtbar oder versteckt in der wiederverwendbaren Einrichtung installiert ist.

6. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** der Transponder mit der Einrichtung zum Tragen von Artikeln während des Transports vergossen oder in diese eingefügt ist.

7. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** die Einrichtung zum Tragen von Artikeln während des Transports in mindestens zwei Positionen verriegelt werden kann.

8. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** die Einrichtung zum Tragen von Artikeln während des Transports eine zusammenklappbare Kiste ist und daß in dem Transponder der zusammenklappbaren Kiste eines oder mehrere der folgenden Informationsdatenelemente gespeichert werden können:
"verriegelt/zusammengeklappt" im Hinblick auf die Bereitschaft, Füllstatus "gefüllt/leer", Nettogewicht, Zustand "sauber/schmutzig", Lebensdauer oder Herstellungsdatum, Profil der Benutzung, einschließlich Angaben des Datums von Wartung und Reinigung, Zustand "feucht/trocken", Leitfähigkeit des Kunststoffmaterials, Farbe oder Leuchtfarbe, Zustand der Magnetisierung.

9. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** zusätzlich mindestens eines der folgenden Informationsdatenelemente bezüglich der transportierten Artikel gespeichert werden kann:
Beschaffenheit der Fracht, Menge und Gewicht der Fracht, Art der Verpackung, Lieferzeit, Empfänger der Artikel, Preis der Artikel, Farbe der Artikel, Einheitlichkeit der Artikel, Anzahl von Artikeln oder Anzahl von Bündeln, Kommissionierungszahl der Artikel, akustische Emissionen oder Geräusche der Artikel.

10. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** zusätzlich mindestens eine der folgenden Informationsangaben bezüglich der Umgebung gespeichert werden kann:
Temperatur, Luftfeuchtigkeit, Luftdruck bzw. Höhenlage, Strahlung, Staub, Geräusche, Lichtintensität, Erschütterung.

11. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** die in dem Transponder enthaltenen Informationen durch ein elektronisches Lesegerät ausgelesen und einer zentralen Speicherung zugeführt werden können, und
**dadurch gekennzeichnet, daß** diese Informationen zur Verwaltung und Identifikation von Transportrouten online zugänglich sind.

12. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** die wiederverwendbaren Einrichtungen zum Tragen von Artikeln während des Transports in bezug auf Transporte, routinemäßige Inspektionen, Reinigung und/oder Wartung verwaltet werden.

13. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** der Transponder gegenüber atmosphärischen und Umweltbedingungen wie zum Beispiel Feuchtigkeit und Temperatur unempfindlich ist.

14. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** der Transponder mit einem oder mehreren Sensoren verbunden ist.

15. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** der Transponder einen an den Transponder angekoppelten Timer zum Registrieren einer zwischen zwei Ereignissen auftretenden Zeitverzögerung umfaßt, wobei der Timer entsprechend der abgelaufenen Zeit ein Signal erzeugt und das Signal zu dem Transponderspeicher sendet.

16. Informationssystem nach Anspruch 1 oder Anwendung der wiederverwendbaren Einrichtungen nach Anspruch 2 oder Anwendung eines Transponders nach Anspruch 3, **dadurch gekennzeichnet, daß** die wiederverwendbare Einrichtung zum Tragen von Artikeln während des Transports im Leerzustand in einem ersten Bereitschaftszustand gestapelt werden kann, in dem das Stapelvolumen im Vergleich zu dem in einem zweiten mechanischen Bereitschaftsstatus eingenommenen Volumen verringert ist.

17. Informationssystem nach Anspruch 1 oder Anwendung der wiederverwendbaren Einrichtungen nach Anspruch 2 oder Anwendung eines Transponders nach Anspruch 3, wobei die Informationszentrale an das Internet angekoppelt ist, um Daten in dieses zu senden, wobei die Daten dadurch online verfügbar sind.

18. Informationssystem nach Anspruch 1 oder Anwendung der wiederverwendbaren Einrichtungen nach Anspruch 2 oder Anwendung eines Transponders nach Anspruch 3, wobei die Informationszentrale an eine Verbindungsstrecke eines globalen Navigationssystems (GPS) angekoppelt ist.

## Revendications

1. Système d'informations comprenant au moins un centre d'informations et une pluralité de dispositifs réutilisables destinés à supporter des articles durant le transport,
- chaque dispositif réutilisable comprenant un répondeur ou transpondeur qui reçoit des informations concernant un emplacement du dispositif et qui peut être interrogé,
- le centre d'informations comportant un ordinateur qui interroge les répondeurs de la pluralité de dispositifs réutilisables afin d'obtenir au moins des informations concernant les emplacements desdits dispositifs et qui mémorise lesdites informations, et
dans lequel chaque répondeur est conçu pour mémoriser d'autres informations dans celui-ci, lesdites informations comprenant
- des conditions ou d'autres données des articles qui sont transportés, et
- des données destinées à fournir un profil d'utilisation du dispositif destiné à supporter des articles durant le transport.

2. Application desdits dispositifs réutilisables destinés à supporter des articles durant le transport dans un système d'informations selon la revendication 1,
**caractérisé en ce que** le répondeur de chaque dit dispositif réutilisable est conçu pour mémoriser d'autres informations, lesdites autres informations comprenant au moins un état mécanique d'aptitude dudit dispositif réutilisable.

3. Application dudit répondeur ou transpondeur dans un système d'informations selon la revendication 1 comportant des dispositifs réutilisables destinés à supporter des articles durant le transport,
lequel répondeur est conçu pour mémoriser et fournir en sortie des informations comprenant un emplacement et un état mécanique d'aptitude et un profil d'utilisation du dispositif respectif destiné à supporter des articles durant le transport, et
d'autres données concernant des conditions desdits articles transportés.

4. Système d'informations selon la revendication 1, ou application des dispositifs réutilisables selon la revendication 2, ou application d'un répondeur selon la revendication 3, **caractérisé en ce qu'**un profil de température ou une limite de température peut être en outre mémorisée dans ledit répondeur.

5. Système d'informations selon la revendication 1, ou application des dispositifs réutilisables selon la revendication 2, ou application d'un répondeur selon la revendication 3, **caractérisé en ce que** le répondeur est installé dans le dispositif réutilisable de sorte qu'il est invisible ou caché.

6. Système d'informations selon la revendication 1, ou application des dispositifs réutilisables selon la revendication 2, ou application d'un répondeur selon la revendication 3, **caractérisé en ce que** le répondeur est moulé ou inséré dans le dispositif destiné à supporter des articles durant le transport.

7. Système d'informations selon la revendication 1, ou application des dispositifs réutilisables selon la revendication 2, ou application d'un répondeur selon la revendication 3, **caractérisé en ce que** le dispositif destiné à supporter des articles durant le transport peut être bloqué dans au moins deux positions.

8. Système d'informations selon la revendication 1, ou application des dispositifs réutilisables selon la revendication 2, ou application d'un répondeur selon la revendication 3, **caractérisé en ce que** le dispositif destiné à supporter des articles durant le transport est une caisse pliante et **en ce qu'**une ou plusieurs des données d'informations qui suivent peuvent être mémorisées dans le répondeur de ladite caisse pliante :
"bloqué/plié" en ce qui concerne l'état d'aptitude, l'état de remplissage "rempli/vide", le poids net, l'état "propre/sale", la durée de vie ou la date de fabrication, le profil d'utilisation y compris les dates d'entretien et d'assainissement, l'état "humide/sec", la conductivité de la matière plastique, la couleur ou la couleur fluorescence, l'état de magnétisation.

9. Système d'informations selon la revendication 1, ou application des dispositifs réutilisables selon la revendication 2, ou application d'un répondeur selon la revendication 3, **caractérisé en ce qu'**au moins l'une des données d'informations qui suivent concernant les articles transportés peut être mémorisée en plus :
la nature du fret, la quantité et le poids du fret, le type de conditionnement, la date de livraison, le destinataire des articles, le prix des articles, la couleur des articles, la consistance des articles, le nombre des articles ou le nombre de paquets, le numéro de commande des articles, les émissions acoustiques ou le bruit des articles.

10. Système d'informations selon la revendication 1, ou application des dispositifs réutilisables selon la revendication 2, ou application d'un répondeur selon la revendication 3, **caractérisé en ce qu'**au moins une information parmi les informations qui suivent concernant l'environnement peut être mémorisée en plus :
la température, l'humidité de l'air, la pression de l'air en fonction de l'altitude, le rayonnement, la poussière, le bruit, l'intensité lumineuse, les secousses.

11. Système d'informations selon la revendication 1, ou application des dispositifs réutilisables selon la revendication 2, ou application d'un répondeur selon la revendication 3, **caractérisé en ce que** les informations contenues dans le répondeur peuvent être lues par un dispositif de lecture électronique et fournies à une mémoire centrale, et
**caractérisé en ce que** ces informations sont accessibles en ligne dans le but de gérer et d'identifier des itinéraires de transport.

12. Système d'informations selon la revendication 1, ou application des dispositifs réutilisables selon la revendication 2, ou application d'un répondeur selon la revendication 3, **caractérisé en ce que** les dispositifs réutilisables destinés à supporter des articles durant le transport sont gérés en fonction des transports, des inspections de routine, de l'assainissement et/ou de l'entretien.

13. Système d'informations selon la revendication 1, ou application des dispositifs réutilisables selon la revendication 2, ou application d'un répondeur selon la revendication 3, **caractérisé en ce que** le répondeur ou transpondeur est insensible aux conditions atmosphériques et de l'environnement, par exemple l'humidité et la température.

14. Système d'informations selon la revendication 1, ou application des dispositifs réutilisables selon la revendication 2, ou application d'un répondeur selon la revendication 3, **caractérisé en ce que** le répondeur ou transpondeur est relié à un ou plusieurs capteurs.

15. Système d'informations selon la revendication 1, ou application des dispositifs réutilisables selon la revendication 2, ou application d'un répondeur selon la revendication 3, **caractérisé en ce que** le répondeur ou transpondeur comprend un temporisateur, qui est couplé au répondeur en vue d'enregistrer un retard se produisant entre deux événements, où le temporisateur génère un signal en correspondance avec la durée expirée et émet ledit signal vers la mémoire du répondeur.

16. Système d'informations selon la revendication 1, ou application des dispositifs réutilisables selon la revendication 2, ou application d'un répondeur selon la revendication 3, **caractérisé en ce que** le dispositif réutilisable destiné à supporter des articles durant le transport peut être empilé à l'état vide dans un premier état d'aptitude dans lequel le volume d'empilement est réduit par comparaison au volume d'empilement qui est pris dans un second état mécanique d'aptitude.

17. Système d'informations selon la revendication 1, ou application des dispositifs réutilisables selon la revendication 2, ou application d'un répondeur selon la revendication 3, dans lequel le centre d'informations est couplé au réseau Internet en vue d'une transmission de données vers celui-ci, les données étant ainsi disponibles en ligne.

18. Système d'informations selon la revendication 1, ou application des dispositifs réutilisables selon la revendication 2, ou application d'un répondeur selon la revendication 3, dans lequel le centre d'informations est couplé à une liaison de système de positionnement global (GPS).
